(19) **Europäisches Patentamt**

**European Patent Office**

**Office européen des brevets**

(11) **EP 1 562 052 A1**

(12) **EUROPÄISCHE PATENTANMELDUNG**

(43) Veröffentlichungstag:
**10.08.2005 Patentblatt 2005/32**

(51) Int Cl.$^7$: **G01S 13/90**

(21) Anmeldenummer: **04030552.6**

(22) Anmeldetag: **23.12.2004**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(30) Priorität: **03.02.2004 DE 102004005399**

(71) Anmelder: **EADS Deutschland GmbH**
**85521 Ottobrunn (DE)**

(72) Erfinder:
• **Kaltschmidt, Horst, Prof. Dr.**
**85579 Neubiberg (DE)**
• **Klausing, Helmut, Dr.**
**82234 Wessling-Hochstadt (DE)**

(74) Vertreter: **Meel, Thomas**
**Patentassessor**
**c/o EADS Deutschland GmbH**
**Patentabteilung FCL6**
**88039 Friedrichshafen (DE)**

(54) **Verfahren zur Verbesserung der Lateralauflösung eines Rosar-Sytems**

(57) Die Erfindung betrifft ein Verfahren zur Verbesserung der Lateralauflösung eines Radarsystems mit synthetischer Apertur auf der Basis rotierender Antennen mit einem Sender, einem Empfänger sowie Antennen zum Senden und Empfangen von Radarsignalen. Gemäß der Erfindung wird in einem ersten Verfahrensschritt das aus einem Kreisring stammende Empfangssignal mit der durch die Kenngrößen - Länge des Rotorblattes L, Winkelgeschwindigkeit $\omega_0$ des Rotorblattes, Entfernung $R_{GO}$ vom Drehpunkt des Rotors zum Zielobjekt O und Höhe $H_0$ des Rotorblattes über dem Boden - bestimmten Referenzfunktion der idealen Kreisbewegung kreuzkorreliert. In einem zweiten Verfahrensschritt wird die von der Rotorstellung $\alpha$ und dem Absand R zwischen Objekt und Antenne abhängigen Ergebnisfunktion $\Psi(\alpha,R)$ der Kreuzkorrelation auf ein Maximum abgesucht. In weiteren sequentiellen Verfahrensschritten wird, jeweils ausgehend von einer in einem vorherigen Verfahrensschritt berechneten Ergebnisfunktion $\Psi(\alpha,R)$, $\Psi(\alpha_Z,R)$ für eine Rotorstellung $a_R$ eine verbesserte Ergebnisfunktion $\Psi(\alpha_Z,R)$ aus einer durch eine veränderte Kenngröße ($\omega_0$, L, $R_{GO}$, $H_0$) bestimmten Referenzfunktion berechnet, wobei die jeweilige Kenngröße ($\omega_0$, L, $R_{GO}$, $H_0$) derart verändert wurde, dass die Schärfe des Maximums maximal wird.

Fig. 5

**Beschreibung**

Die Erfindung betrifft ein Verfahren zur Verbesserung der Lateralauflösung eines ROSAR (rotating synthetic aperture radar)-Systems gemäß dem Oberbegriff des Patentanspruchs 1.

Das unter anderem durch die DE 39 220 86 C1 bekannt gewordene ROSAR-Prinzip erfordert für die rotierenden Sende- und Empfangsantennen eine ideale Kreisbewegung mit konstanter Winkelgeschwindigkeit, die durch ein zusätzlich zu den Huschrauberrotoren angebrachtes Antennen tragendes Drehkreuz erreichbar ist, oder im Falle der rotormontierten Antennen einen Kinematiksensor, der die Abweichungen von den idealen Kreisbewegungen feststellt und dem ROSAR-Prozessor diese als Korrekturmesssignale zuführt. Das dem Stand der Technik zugrunde gelegte System ist in der Dissertation Klausing, Kapitel 3 "ROSAR- Theorie", Seite 27 bis Seite 64 beschrieben. Das dem Stand der Technik zugrunde liegende ROSAR-System ist in den Druckschriften DE 39 22 086 C1, DE 43 23 511 C1 sowie DE 43 06 920 C2 eingehend beschrieben. Fig. 1 zeigt die geometrische Grundlage zur Berechnung der Klausing'schen Referenzfunktion für den störungsfreien Fall. Diese Referenzfunktion wird mit dem Empfangssignal kreuzkorreliert, was in Folge die in der ROSAR-Theorie berechnete maximale Lateralauflösung erbringt.

Diese Referenzfunktion ist durch folgende vier ROSAR-Kenngrößen bestimmt, die als zeitlich konstant vorausgesetzt werden:

    1. Länge L des Rotorblattes bzw. die Entfernung der Antenne zum Drehpunkt,
    2. Kreisfrequenz $\omega_0$ des Rotorblattes,
    3. Entfernung $R_{GO}$ zwischen Objekt und Drehpunkt,
    4. Höhe $H_0$ der Antenne über dem Boden.

Ist die Voraussetzung der zeitlichen Konstanz nur einer der vier ROSAR-Kenngrößen nicht gegeben, so vermindert sich die Lateralauflösung, man spricht von einer Defokussierung. Selbstverständlich wächst die Defokussierung, wenn sich weitere ROSAR-Kenngrößen oder gar alle vier zeitlich ändern.
Sobald jedoch der zeitliche Verlauf der vier ROSAR-Kenngrößen bekannt ist, kann für diesen Fall eine spezielle Referenzfunktion errechnet werden, die mit dem Empfangssignal kreuzkorreliert, die maximale Lateralauflösung erbringt, d.h. eine Defokussierung findet in diesem Fall nicht statt. Wird eine spezielle Referenzfunktion auf Grund von Analysen des Empfangssignals berechnet und diese mit dem Empfangssignal kreuzkorreliert, spricht man von Selbstfokussierung.

Die bisher bekannten Vorschläge zur Messung der vier angegebenen Kenngrößen erfordern einen sehr hohen technischen und rechenintensiven Aufwand. Eine Methode zur Selbstfokussierung ist in der Patentschrift DE 198 51 910 C1 angegeben. Das dort beschriebenen Verfahren beruht auf dem stochastischen Optimierungsverfahren nach Rechenberg, welches wiederum auf dem biologischen Prinzip der zufälligen Mutation und Selektion beruht. Der Rechenaufwand ist sehr aufwendig und es gibt Situationen, in denen das Verfahren nur sehr schwach oder überhaupt nicht konvergiert.

Aufgabe der vorliegenden Erfindung ist es, ein Verfahren anzugeben, mit welchem die Selbstfokussierung kosteneffektiv und in Echtzeitnähe durchgeführt werden kann.

Erfindungsgemäß wird in einem ersten Verfahrensschritt das aus einem Kreisring stammende Empfangssignal mit der durch die Kenngrößen — Länge des Rotorblattes L, Winkelgeschwindigkeit $\omega_0$ des Rotorblattes, Entfernung $R_{GO}$ vom Drehpunkt des Rotors zum Zielobjekt O und Höhe $H_0$ des Rotorblattes über dem Boden — bestimmten Referenzfunktion der idealen Kreisbewegung kreuzkorreliert. In einem zweiten Verfahrensschritt wird die von der Rotorstellung $\alpha$ und dem Abstand R zwischen Objekt und Antenne abhängigen Ergebnisfunktion $\Psi(\alpha,R)$ der Kreuzkorrelation auf ein Maximum abgesucht. In weiteren sequentiellen Verfahrensschritten wird, jeweils ausgehend von einer in einem vorherigen Verfahrensschritt berechneten Ergebnisfunktion $\Psi(\alpha,R)$, $\Psi(\alpha_Z,R)$ für eine Rotorstellung $a_R$ eine verbesserte Ergebnisfunktion $\Psi(\alpha_Z,R)$ aus einer durch eine veränderte Kenngröße $(\omega_0, L, R_{GO}, H_0)$ bestimmten Referenzfunktion berechnet, wobei die jeweilige Kenngröße $(\omega_0, L, R_{GO}, H_0)$ derart verändert wurde, dass die Schärfe des Maximums maximal wird.

Mit diesem erfindungsgemäßen Verfahren zur Selbstfokussierung können Abweichungen von der idealen Kreisbahn eines ROSAR-Systems, wie sie bei Hubschraberanwendungen auftreten können, effektiv und kostengünstig in Echtzeitnähe korrigiert und damit die volle Auflösefähigkeit erreicht werden.

Das erfindungsgemäße Verfahren kann z.B. in Geräten zur Signalverarbeitung der Sende-/Empfangssignale eingesetzt werden. Ein Vorteil hierbei ist, dass Hubschrauber, in welche derartige Geräte eingebaut werden, die seit langem geforderte Allwetterfähigkeit erlangen.

In einer vorteilhaften Ausführung der Erfindung können die zur Berechnung der Referenzfunktion benötigten Positionsinformationen durch ein differentielles globales Positionierungssystem (GPS) eingegeben werden. Positionsinformationen können dabei vorteilhaft zusätzlich über einen bidirektionalen HF/VHF-Datenlink, durch Mobilkommunikation über GSM oder über Satellitenkommunikation eingeben werden. Dadurch ist es möglich, Positionsinformationen, welche an Bord des Hubschraubers generiert werden mit Informationen von räumlich entfernten Quellen zu kombinieren. Unter Positionsinformationen werden insbesondere Rotorpositions-, Hindernis- und Zielobjektdaten verstanden. Dadurch ist es möglich, dem Signalausverfahren weitere Informationen zur Verfügung zu stellen, wodurch die Selbstfokussierung weiter verbessert wird.

Die Erfindung wird im weiteren anhand von Zeichnungen näher erläutert. Es zeigen:

Fig. 1 die Geometrie zur Berechnung der Klausing'schen Referenzfunktion

Fig. 2 einen beispielhaften Verlauf einer Ergebnisfunktion $\Psi(\alpha, R)$,

Fig. 3 beispielhafte Darstellung eines Rotorwinkels $a_R$, der in Bezug auf das Objekt O die höchste Dopplerfrequenzverschiebung für das Sende-/Empfangssignal bewirkt,

Fig. 4 eine beispielhafte Darstellung der zusätzlichen Quellen von Positionsinformationen,

Fig. 5 ein beispielhaftes Blockschaltbild des erfindungsgemäßen Verfahrens.

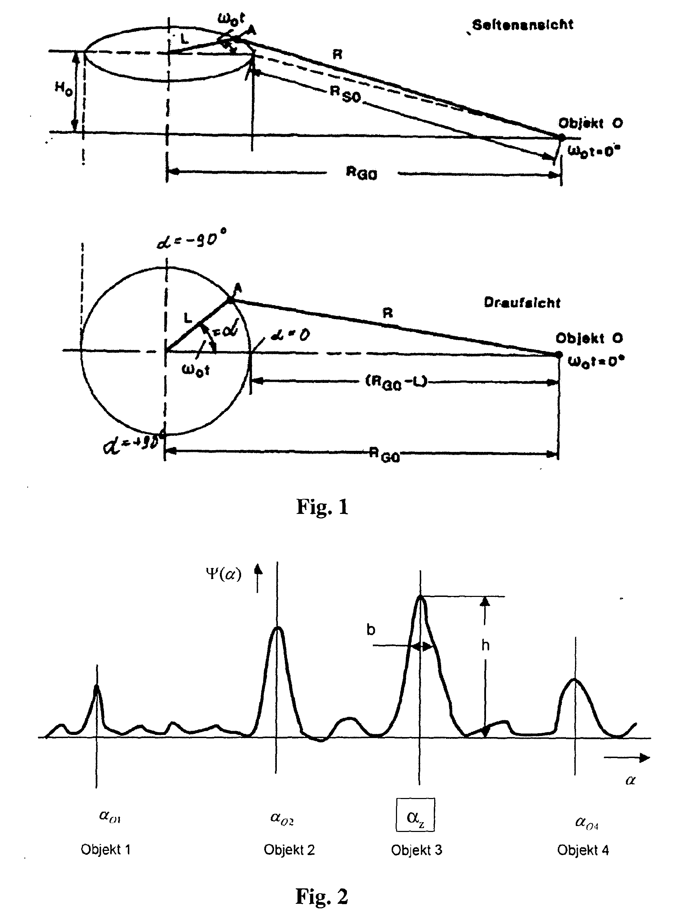

Im ersten Verfahrensschritt wird das Empfangssignal mit dem Klausing'schen Referenzsignal, welches unter der Annahme einer idealen Kreisbewegung der Antennen (Fig. 1), also unter der Voraussetzung zeitlicher Konstanz aller vier ROSAR-Kenngrößen errechnet ist, kreuzkorreliert. Die Kreuzkorrelationsfunktion, die in [1] als Ergebnisfunktion bezeichnet wird, ist eine vom Winkel abhängige Funktion. Für jeden Entfernungsring, das ist ein Ring um den Rotordrehpunkt mit dem Radius $R_{GO}$ und der Dicke $\Delta R$ wird eine Ergebnisfunktion $\Psi(\alpha, R)$ errechnet. Fig. 2 zeigt beispielhaft den typischen Verlauf einer Ergebnisfunktion für Objekte in natürlicher Umgebung. Im dargestellten Fall sind 4 Objekte identifiziert worden.

Im zweiten Verfahrensschritt wird ein eindeutiges Maximum der Ergebnisfunktion, auch als Kreuzkorrelationsfunktion bezeichnet, ausgewählt. Dabei ist $\alpha_{0Z}$ diejenige Winkellage die der Winkellage des ausgewählten Objekts entspricht.

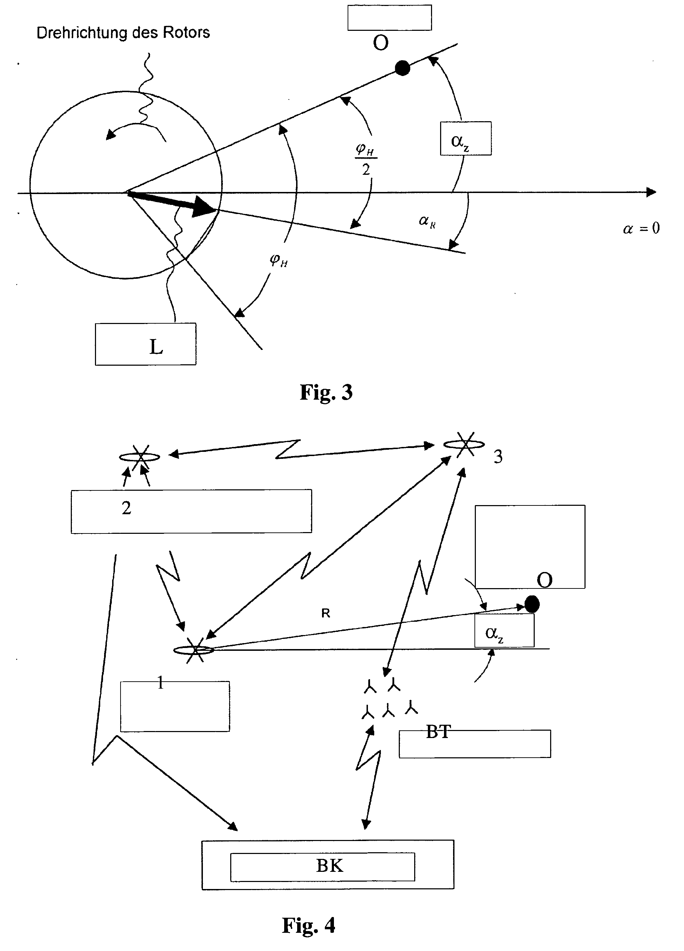

In einem dritten Verfahrensschritt wird für eine Rotorblattwinkelstellung $\alpha_R$, bei welcher vorteilhaft die Veränderung der Dopplerfrequenz des Sende-/Empfangssignals maximal ist, eine verbesserte Ergebnisfunktion $\Psi(\alpha)$ berechnet (Fig. 3). Dabei wird eine Kenngröße $\omega_0$, $R_{GO}$, $H_0$ der Ergebnisfunktion in eine Richtung verändert und dabei die Veränderung der Spitze (Höhe) und Breite des Maximums beobachtet. Dabei ist insbesondere diejenige Rotorblattwinkelstellung $\alpha_R$ die eine möglichst hohe Veränderung der Doppler-Frequenz des Sende-/Empfangssignals bewirkt:

$$\alpha_R = \alpha_z - \varphi_H/2$$

wobei $\varphi_H$ die Halbwertsbreite der Sende-/Empfangsantenne ist.

Wird bei positiver Veränderung der Kenngröße des Rotorblattes die Spitze der Korrelationsfunktion höher, so wird in gleicher Richtung fortgefahren solange noch eine Erhöhung der Spitze bzw. Verkleinerung der Breite erfolgt. Für den Fall, dass die Höhe der Spitze sich erniedrigt, wird umgekehrt verfahren. Ist eine maximale Schärfe des Maximums erreicht, d.h. eine weitere Veränderung der Kenngröße in negativer wie positiver Richtung bringt keine Erhöhung der Spitze bzw. Verkleinerung der Breite, so wird mit den unveränderten Kenngrößen und der einen veränderten Kenngröße eine neue Referenzfunktion bestimmt, welche zur Berechnung einer verbesserten Ergebnisfunktion $\Psi(\alpha_Z, R)$ mit dem Empfangssignal korreliert wird.

Vorteilhaft wird beim dritten Verfahrensschritt als Kenngröße die Winkelgeschwindigkeit $\omega_0$ herangezogen. Dies ist zweckmäßig, da die Winkelgeschwindigkeit $\omega_0$ diejenige Kenngröße ist, welche den erkennbar größten Einfluß auf die Höhe des Maximums der Ergebnisfunktion hat. In den folgenden Verfahrensschritten werden die Länge L des Rotorblattes, die Entfernung $R_{GO}$ zwischen Objekt und Drehpunkt des Rotorblattes sowie die Höhe $H_0$ der Antenne über dem Boden in gleicher Weise variiert, und die Veränderung auf die Spitze oder die Breite des Maximums beobachtet und somit eine weitere Optimierung der Fokussierung vorgenommen.

Dabei werden selbstverständlich Informationen über die Höhe der Antenne über dem Boden oder über die Entfernung zwischen Objekt und Drehpunkt des Rotors zur Berechnung der Referenzfunktion berücksichtigt. Die Flughöhe kann zweckmäßig an Bord des Hubschraubers gemessen werden. Mit Hilfe der Flughöhe und des bekannten Depressionswinkels der Antenne und der bekannten Rotorlänge L kann die Entfernung $R_{GO}$ zum Zielobjekt jederzeit berechnet werden. Die entsprechenden Bausteine sind DE 39 22 086 C1 ausführlich dargestellt und beschrieben.

Vorteilhaft werden die zur Berechnung der Referenzfunktion benötigten Positionsinformationen des Hubschraubers durch ein differentielles globales Positionierungssystem (GPS) eingegeben. Die Navigation erfolgt z.B. auf der Basis einer digitalisierten Geländekarte einschließlich zugefügter Infrastrukturdaten (Bebauung, Straßen, Flüsse, Hochspannungsleitungen etc.) in Form einer CD-ROM als Datenbank. Beim virtuellen Cockpit erfolgt also eine Flugführung anhand der Kombination eines digitalen Geländemodells in Verbindung mit einer satellitengestützten Navigation, wie dem GPS bzw. hochgenauen Differential-GPS. Das gerade überflogene Gebiet wird aus der Sichtposition des Piloten in Form einer synthetischen Sicht in Echtzeit dargestellt (DE 100 15 164).

Die Positionsinformationen können vorteilhaft von weiteren Hubschraubern und/oder mobilen und/oder stationären Bodeneinheiten und/oder Bodenkontrolleinrichtungen stammen. In Fig. 4 sind beispielhaft Informationsquellen dargestellt, welche einen Hubschrauber mit Positionsinformationen versorgen können. Dargestellt ist ein Hubschrauberverbund, bei welchem zusätzliche Informationen von z.B. Hubschrauber 2 und Hubschrauber 3 dem gerade aufklärenden Hubschrauber 1 übermittelt werden. Hubschrauber 2 hat dabei z.B. einen besonders guten GPS-Empfang, jedoch keine Sicht zum Zielobjekt O. Hubschrauber 3 hat z.B. eine besonders gute Funkverbindung zu einem Bodentrupp BT, aber keine Sicht zum Zielobjekt O.

Die gesamte Aufklärungslage kann dann von einer Bodenkontrolleinrichtung BK einem Bodentrupp BT, der hier mit Hubschrauber 3 direkt über eine sicherer Funkverbindung geschaltet ist, übermittelt werden. Danach können geeignete Gegenmaßnahmen ergriffen werden.

Verfügt der Hubschrauber 1 über keine präzise Ortungseinrichtung, wird jedoch von anderen Hubschraubern genau geortet, so können diese Informationen ebenfalls an Hubschrauber 1 über sichere Funkverbindungen übertragen werden.

Vorteilhaft kann die effiziente Übertragung von Positions-, Hindernis- und Zieldaten über HF/VHF-Datenlink erfolgen oder durch Mobilkommunikation über GSM, speziell bei zivilen Anwendungen, oder über Satellitenkommunikation.

Erfolgt die Übertragung von Positions-, Hindernis- und Zieldaten über HF-Funk, so ist eine bidirektionale Datenfunkstrecke in Frequenzbereich von ca. 1 MHz bis ca. 30 MHz sinnvoll anzuwenden. Die Übertragung kann in diesem Frequenzbereich über Raumwelle oder Direktwelle, je nach Frequenz erfolgen. Bei der Raumwelle im Frequenzbereich bis ca. 10 MHz ist keine Sichtverbindung zwischen den Kommunikationsteilnehmern (Hubschrauberverbund untereinander, Verbindung zu einer Bodenkontrolleinrichtung BK oder Bodentrupp BT) notwendig und es können Entfernungen bis ca. 200 km gut überbrückt werden, was für den Einsatz im Bereich der Zielaufklärung vollkommen ausreicht.

Im Frequenzbereich von ca. 20 MHz bis ca. 30 MHz kann eine Übertragung mit einer Direktwelle erfolgen, wobei hier auch noch Reichweiten bis mindestens 100 km erreichbar sind; der Vorteil der höheren Frequenz liegt in der höheren Nutzbitrate zur Übertragung von Positions-, Hindernis- und Zieldaten. Senden und Empfangen erfolgt stets omnidirektional.

Bei Verwendung von GSM-basierten Systemen kann, gerade bei zivilen Anwendungen, die inzwischen gut ausgebaute Infrastruktur mit hinreichender Ausleuchtung benutzt werden. Der Vorteil besteht weiterhin darin, dass auch Einzelpersonen oder Fahrzeuge mittels Funktelefonen mit den Hubschraubern oder Bodenkontrolleinrichtungen BK kommunizieren können und hier höhere Datenraten als bei reiner HF-Kommunikation realisiert werden können. Hierbei ist die Übertragung von Daten- und Sprache gleichermaßen möglich.

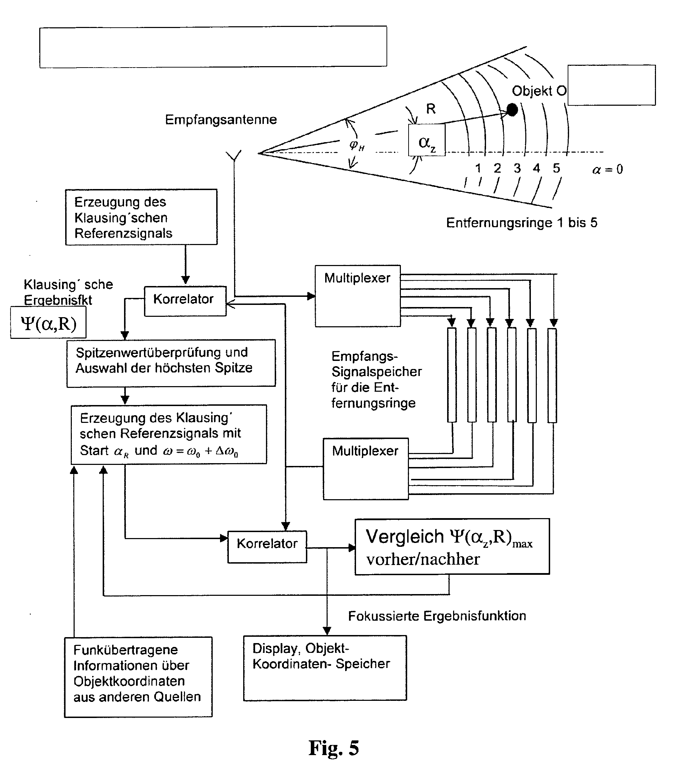

Fig. 5 zeigt noch einmal zusammenfassend das Blockschaltbild zum erfindungsgemäßen deterministischen Selbstfokussierungsverfahren mit den zugehörigen Handlungsabläufen.

Das Empfangssignal wird mit dem Klausing'schen Referenzsignal in einem ersten Korrelator korreliert. Dadurch wird die Klausing'sche Ergebnisfunktion $\Psi(\alpha,R)$ bestimmt, welche im nächsten Block einer Spitzenwertüberprüfung (Maximumüberprüfung) unterzogen wird, wobei zweckmäßig das höchste Maximum (Spitze) ausgewählt wird. An einer Rotorblattposition $\alpha_R$ wird unter Berücksichtigung der Veränderung einer Kenngröße ein neues Referenzsignal berechnet. Im vorliegenden Fall wird hierbei die Winkelgeschwindigkeit $\omega_0$ um jeweils um ein $\Delta\omega_0$ verändert. Bei dieser Berechnung werden auch von anderen Quellen funkübertragene Informationen über Objektkoordinaten berücksichtigt. Das neue Referenzsignal wird in einem weiteren Korrelator mit dem Empfangssignal kreuzkorreliert, woraus sich die neue, verbesserte Ergebnisfunktion $\Psi(\alpha_Z,R)$ ergibt. Die Korrelation des mit einer veränderten Winkelgeschwindigkeit bestimmten Referenzsignals mit dem Empfangssignal wird solange weitergeführt, solange ein Vergleich zweier nacheinander berechneten Ergebnisfunktion $\Psi(\alpha_Z,R)$ ergibt, dass die zuletzt berechnete Ergebnisfunktion ein unschärferes Maximum aufweist.

Die jeweils berechnete neue Ergebnisfunktion $\Psi(\alpha_Z,R)$ wird zusätzlich auf einem Display ausgegeben oder kann gespeichert werden.

Das Empfangssignal wird mittels Multiplexer in einem Empfangssignalspeicher für Entfernungsringe gespeichert.

Literatur

[1] Klausing, Helmut; "Untersuchung der Realisierbarkeit eines Radars mit synthetischer Apertur durch rotierende Antennen"; MBB-Publikation, MBB-UA-1150-89-Pub; München; Seiten 27-64

**Patentansprüche**

1. Verfahren zur Verbesserung der Lateralauflösung eines Radarsystems mit synthetischer Apertur auf der Basis rotierender Antennen mit einem Sender, einem Empfänger sowie Antennen zum Senden und Empfangen von Radarsignalen,
   **dadurch gekennzeichnet, dass**

   - in einem ersten Verfahrensschritt das aus einem Kreisring stammende Empfangssignal mit der durch die Kenngrößen — Länge des Rotorblattes L, Winkelgeschwindigkeit $\omega_0$ des Rotorblattes, Entfernung $R_{GO}$ vom Drehpunkt des Rotors zum Zielobjekt O und Höhe $H_0$ des Rotorblattes über dem Boden — bestimmten Referenzfunktion der idealen Kreisbewegung kreuzkorreliert wird,
   - in einem zweiten Verfahrensschritt die von der

Rotorstellung $\alpha$ und dem Absand R zwischen Objekt und Antenne abhängigen Ergebnisfunktion $\Psi(\alpha,R)$ der Kreuzkorrelation auf ein Maximum abgesucht wird,

- in weiteren sequentiellen Verfahrensschritten, jeweils ausgehend von einer in einem vorherigen Verfahrensschritt berechneten Ergebnisfunktion $\Psi(\alpha,R)$, $\Psi(\alpha_Z,R)$ für eine Rotorstellung $a_R$ eine verbesserte Ergebnisfunktion $\Psi(\alpha_Z,R)$ aus einer durch eine veränderte Kenngröße ($\omega_0$ , L, $R_{GO}$, $H_0$) bestimmten Referenzfunktion berechnet wird, wobei die jeweilige Kenngröße ($\omega_0$ , L, $R_{GO}$, $H_0$) derart verändert wurde, dass die Schärfe des Maximums maximal wird.

2. Verfahren nach Anspruch 1, **dadurch gekennzeichnet, dass** die Schärfe des Maximums **dadurch** maximiert wird, dass die jeweilige Kenngröße ($\omega_0$, $R_{GO}$, $H_0$) so lange in positiver oder negativer Richtung fortlaufend verändert wird, so lange dies eine Erhöhung der Spitze des Maximums oder eine Verkleinerung der Breite zur Folge hat.

3. Verfahren nach einem der vorangehenden Ansprüche, **dadurch gekennzeichnet, dass** die Rotorstellung $a_R$ diejenige Rotorstellung ist, bei welcher die Veränderung der Dopplerfrequenz des Sende-/Empfangssignals maximal ist.

4. Verfahren nach einem der vorangehenden Ansprüche, **dadurch gekennzeichnet, dass** im dritten Verfahrensschritt die verbesserte Ergebnisfunktion $\Psi(\alpha_Z,R)$ für die Winkelgeschwindigkeit $\omega_0$ des Rotorblattes berechnet wird.

5. Verfahren nach einem der vorangehenden Ansprüche, **dadurch gekennzeichnet, dass** die zur Berechnung der Referenzfunktion benötigten Positionsinformationen durch ein differentielles globales Positionierungssystem (GPS) eingegeben werden.

6. Verfahren nach einem der vorangehenden Ansprüche, **dadurch gekennzeichnet, dass** die zur Berechnung der Referenzfunktion benötigten Positionsinformationen zusätzlich über einen bidirektionalen HF/VHF-Datenlink, durch Mobilkommunikation über GSM oder über Satellitenkommunikation eingeben werden.

7. Verfahren nach Anspruch 5 oder 6, **dadurch gekennzeichnet, dass** die Positionsinformationen Rotorpositions-, Hindernis- und Zielobjektdaten sind.

8. Verfahren nach einem der Ansprüche 5, 6 oder 7, **dadurch gekennzeichnet, dass** die Positionsinformationen von weiteren Hubschraubern und/oder mobilen und/oder stationären Bodeneinheiten und/oder Bodenkontrolleinrichtungen stammen.

**Fig. 1**

**Fig. 2**

Drehrichtung des Rotors

O

$\alpha_z$

$\dfrac{\varphi_H}{2}$

$\alpha_R$

$\alpha = 0$

$\varphi_H$

L

**Fig. 3**

2

3

R

O

$\alpha_z$

1

BT

BK

**Fig. 4**

Empfangsantenne

Objekt O

R

$\alpha_z$

$\varphi_H$

1 2 3 4 5    $\alpha = 0$

Entfernungsringe 1 bis 5

Erzeugung des
Klausing'schen
Referenzsignals

Klausing' sche
Ergebnisfkt

$\Psi(\alpha,R)$

Korrelator

Multiplexer

Spitzenwertüberprüfung und
Auswahl der höchsten Spitze

Empfangs-
Signalspeicher
für die Entfernungsringe

Erzeugung des Klausing'
schen Referenzsignals mit
Start $\alpha_R$ und $\omega = \omega_0 + \Delta\omega_0$

Multiplexer

Korrelator

Vergleich $\Psi(\alpha_z,R)_{max}$
vorher/nachher

Fokussierte Ergebnisfunktion

Funkübertragene
Informationen über
Objektkoordinaten
aus anderen Quellen

Display, Objekt-
Koordinaten- Speicher

**Fig. 5**

**Europäisches Patentamt**

**EUROPÄISCHER RECHERCHENBERICHT**

Nummer der Anmeldung

EP 04 03 0552

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 101 01 990 A1 (EADS DEUTSCHLAND GMBH) 14. August 2002 (2002-08-14) * Zusammenfassung * * Seite 2, Zeile 31 - Seite 3, Zeile 27; Abbildungen 1-4 * ----- | 1 | G01S13/90 |
| A | EP 0 591 651 A (DEUTSCHE AEROSPACE AG; DAIMLER-BENZ AEROSPACE AKTIENGESELLSCHAFT) 13. April 1994 (1994-04-13) * Zusammenfassung * * Seite 6, Zeile 7 - Seite 7, Zeile 41; Abbildungen 1-6 * ----- | 1 | |
| A | DE 43 04 027 A1 (DEUTSCHE AEROSPACE AG, 80804 MUENCHEN, DE; DAIMLER-BENZ AEROSPACE AKTI) 18. August 1994 (1994-08-18) * Zusammenfassung * * Spalte 2, Zeile 35 - Spalte 3, Zeile 14; Abbildungen 1-6 * ----- | 1 | |
| A | EP 0 602 473 A (DEUTSCHE AEROSPACE AG; DAIMLER-BENZ AEROSPACE AKTIENGESELLSCHAFT) 22. Juni 1994 (1994-06-22) * Zusammenfassung * * Seite 4, Zeile 25 - Seite 7, Zeile 37; Abbildungen 1-9 * ----- | 1 | RECHERCHIERTE SACHGEBIETE (Int.Cl.7) G01S |
| A | EP 0 591 652 A (DEUTSCHE AEROSPACE AG; DAIMLER-BENZ AEROSPACE AKTIENGESELLSCHAFT) 13. April 1994 (1994-04-13) * Zusammenfassung * * Seite 3, Zeile 15 - Seite 6, Zeile 49; Abbildungen 1-6 * ----- | 1 | |
| A,D | DE 100 15 164 A1 (KLAUSING, HELMUT; KALTSCHMIDT, HORST) 11. Oktober 2001 (2001-10-11) ----- -/-- | | |

Der vorliegende Recherchenbericht wurde für alle Patentansprüche erstellt

| Recherchenort | Abschlußdatum der Recherche | Prüfer |
|---|---|---|
| Den Haag | 10. Mai 2005 | Blondel, F |

EPO FORM 1503 03.82 (P04C03)

**Europäisches Patentamt**

**EUROPÄISCHER RECHERCHENBERICHT**

**Nummer der Anmeldung**

EP 04 03 0552

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | DE 198 51 910 C1 (KALTSCHMIDT, HORST; KLAUSING, HELMUT) 7. Dezember 2000 (2000-12-07) ----- | | |
| A,D | DE 43 06 920 A1 (DEUTSCHE AEROSPACE AG, 85521 OTTOBRUNN, DE) 8. September 1994 (1994-09-08) ----- | | |
| A,D | DE 39 22 086 C1 (MESSERSCHMITT-BOELKOW-BLOHM GMBH, 8012 OTTOBRUNN, DE) 18. Oktober 1990 (1990-10-18) ----- | | |
| A,D | DE 43 23 511 C1 (DEUTSCHE AEROSPACE AG, 80804 MUENCHEN, DE) 26. Januar 1995 (1995-01-26) ----- | | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| Den Haag | 10. Mai 2005 | Blondel, F |

**ANHANG ZUM EUROPÄISCHEN RECHERCHENBERICHT
ÜBER DIE EUROPÄISCHE PATENTANMELDUNG NR.**

EP 04 03 0552

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2005

| Im Recherchenbericht angeführtes Patentdokument | | Datum der Veröffentlichung | Mitglied(er) der Patentfamilie | | Datum der Veröffentlichung |
|---|---|---|---|---|---|
| DE 10101990 | A1 | 14-08-2002 | DE | 50101903 D1 | 13-05-2004 |
| | | | EP | 1227337 A2 | 31-07-2002 |
| | | | JP | 2002228747 A | 14-08-2002 |
| | | | US | 2002135506 A1 | 26-09-2002 |
| EP 0591651 | A | 13-04-1994 | DE | 4233415 A1 | 07-04-1994 |
| | | | DE | 59304352 D1 | 05-12-1996 |
| | | | EP | 0591651 A1 | 13-04-1994 |
| | | | JP | 2637359 B2 | 06-08-1997 |
| | | | JP | 6194441 A | 15-07-1994 |
| | | | US | 5381152 A | 10-01-1995 |
| DE 4304027 | A1 | 18-08-1994 | KEINE | | |
| EP 0602473 | A | 22-06-1994 | DE | 4242532 A1 | 23-06-1994 |
| | | | DE | 59304416 D1 | 12-12-1996 |
| | | | EP | 0602473 A1 | 22-06-1994 |
| | | | JP | 2875729 B2 | 31-03-1999 |
| | | | JP | 6317660 A | 15-11-1994 |
| | | | US | 5392047 A | 21-02-1995 |
| EP 0591652 | A | 13-04-1994 | DE | 4233416 A1 | 07-04-1994 |
| | | | DE | 59304404 D1 | 12-12-1996 |
| | | | EP | 0591652 A1 | 13-04-1994 |
| | | | JP | 2643078 B2 | 20-08-1997 |
| | | | JP | 6214023 A | 05-08-1994 |
| | | | US | 5379041 A | 03-01-1995 |
| DE 10015164 | A1 | 11-10-2001 | KEINE | | |
| DE 19851910 | C1 | 07-12-2000 | AT | 233407 T | 15-03-2003 |
| | | | DE | 59904370 D1 | 03-04-2003 |
| | | | EP | 1004895 A1 | 31-05-2000 |
| DE 4306920 | A1 | 08-09-1994 | KEINE | | |
| DE 3922086 | C1 | 18-10-1990 | AU | 626220 B2 | 23-07-1992 |
| | | | AU | 5230990 A | 10-01-1991 |
| | | | EP | 0406522 A2 | 09-01-1991 |
| | | | ES | 2066892 T3 | 16-03-1995 |
| | | | JP | 2643007 B2 | 20-08-1997 |
| | | | JP | 3044590 A | 26-02-1991 |
| | | | KR | 142668 B1 | 17-08-1998 |
| | | | US | 5017922 A | 21-05-1991 |
| DE 4323511 | C1 | 26-01-1995 | DE | 59404192 D1 | 06-11-1997 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**                    EP 04 03 0552

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2005

| Im Recherchenbericht angeführtes Patentdokument | Datum der Veröffentlichung | Mitglied(er) der Patentfamilie | Datum der Veröffentlichung |
|---|---|---|---|
| DE 4323511 C1 | | EP 0634668 A1 | 18-01-1995 |
| | | HK 1001501 A1 | 19-06-1998 |
| | | JP 3050492 B2 | 12-06-2000 |
| | | JP 7146363 A | 06-06-1995 |
| | | US 5451957 A | 19-09-1995 |

EPO FORM P0461

Für nähere Einzelheiten zu diesem Anhang : siehe Amtsblatt des Europäischen Patentamts, Nr.12/82